# EUROPEAN PATENT APPLICATION

(11) **EP 1 849 994 A1**
(43) Date of publication of application: **31.10.2007**
(21) Application number: 06008422.5
(22) Date of filing: 24.04.2006
(51) Int. Cl.: F02M 55/00, F02M 69/46, F16L 37/14, F02M 61/14

(54) **Coupling arrangement for mounting an injector in a fuel rail**

(71) Applicant: SIEMENS AKTIENGESELLSCHAFT, 80333 München (DE)
(72) Inventor: Ricci, Roberto, 57121 Livorno (IT)

(57) **Abstract**

A Coupling arrangement (6) for coupling an injector (2) to a coupling body (8) of a fluid supply (4) is formed and arranged in such a way that at least a part of a first axial section (18) of the injector (2) is radially surrounded by a second axial section (12) of the coupling body (8). At least a part of a second axial section of the injector (2) is radially surrounded by a first axial section (10) of the coupling body (8). That axial section (18, 20) of the injector (2) which has an angular cross section is surrounded by that axial section (10, 12) of the coupling body (8) which has an angular inner cross section. That axial section (18, 20) of the injector (2) which has a circular cross section is surrounded by that axial section (10, 12) of the coupling body (8) which has a circular inner cross section.

## Description

The invention relates to a coupling body for a coupling arrangement and to an injector for the coupling arrangement. The coupling body is cup-shaped and has a fluid recess in a bottom portion of the coupling body. The injector is suitable for injecting fluid and comprises a coupling section for coupling the injector to the coupling body. Further, the invention relates to the coupling arrangement which comprises the coupling section of the injector, the coupling body and at least a part of a fluid supply.

EP 0 969 203 A1 discloses a coupling system between an engine head, an injector, and a fuel manifold. The engine head has a seating designed to house the injector. The fuel manifold extends above the engine head and is connected to the injector through a bush projecting from the fuel manifold. The injector is coupled to the seating by means of a ball coupling. The fuel manifold is rigidly secured to the engine head of the engine. An opposing spring is interposed between the fuel manifold and the injector to compress the injector inside the seat.

The object of the invention is to create a coupling arrangement, a coupling body for the coupling arrangement, and an injector for the coupling arrangement which enables a precise assembling of the injector to the fluid supply in an easy way.

The object of the invention is achieved by the independent claims 1, 6, and 10. Advantageous embodiments of the invention are given in the sub-claims.

The invention is distinguished concerning a first aspect of the invention by a coupling body for a coupling arrangement. The coupling body is cup-shaped and has a fluid recess in a bottom portion of the coupling body. The coupling body comprises a first axial section and a second axial section of the coupling body. The first,and the second axial sections of the coupling body are formed and arranged in such a way that the second axial section of the coupling body is arranged intermediate the bottom portion and the first axial section of the coupling body in axial direction of the coupling body. The inner cross-section area of the first axial section of the coupling body completely overlaps the inner cross-section area of the second axial section of the coupling body in a projection of the inner cross-section area of the second axial section of the coupling body on the inner cross-section area of the first axial section of the coupling body. The first axial section of the coupling body comprises a circular inner cross-section and the second axial section of the coupling body comprises an angular inner cross-section or the first axial section of the coupling body comprises the angular inner cross-section and the second axial section of the coupling body comprises the circular inner cross-section.

If the injector has a coupling section which comprises axial sections corresponding to the axial sections of the coupling body and if the injector with its coupling section is arranged in the coupling body, the angular and circular cross-sections of the axial sections of the coupling body contribute to a proper positioning of the injector relative to the coupling body. Further, if the coupling body is fixed to a fluid supply communicating with the fluid supply through the fluid recess in the bottom portion, the angular and circular cross-sections of the axial sections of the coupling body contribute to a proper positioning of the injector relative to the fluid supply.

In an advantageous embodiment of the first aspect of the invention, the coupling body comprises a flexible element. The flexible element is fixed at one axial end of the flexible element to the bottom portion of the coupling body in such a way that a fluid which passes the fluid recess of the bottom portion may pass the flexible element. This contributes to the proper positioning of the injector at the fluid supply in axial direction of the coupling body.

In a further advantageous embodiment of the first aspect of the invention, the flexible element comprises a spring. This contributes to the proper positioning of the injector at the fluid supply in a very simple way.

In a further advantageous embodiment of the first aspect of the invention, the first axial section of the coupling body has a first coupling recess which extends rectangular to the axis of the coupling body. This may contribute to a proper fixation of the injector to the fluid supply and this may contribute to a very simple assembling of the injector to the fluid supply.

In a further advantageous embodiment of the first aspect of the invention, the first coupling recess of the first axial section of the coupling body takes in a first coupling spring and a first ball. The first coupling recess, the first coupling spring, and the first ball are formed and arranged in such a way that the first ball is coupled to the coupling body movable in axial direction of the first coupling recess and that the first ball is pressed towards the inside of the coupling body by the first coupling spring. This may contribute to the proper fixation of the injector to the fluid supply and this may contribute to the simple assembling of the injector to the fluid supply.

The invention is distinguished concerning a second aspect of the invention by the injector for injecting fluid comprising the coupling section for coupling the injector to the fluid supply. The coupling section comprises an end face of the injector and the first and the second axial section of the injector. The first axial section of the injector is arranged intermediate the end face and the second axial section of the injector in axial direction of the injector. A cross-section area of the second axial section of the injector completely overlaps a cross-section area of the first axial section of the injector in a projection of the first axial section of the injector on the second axial section of the injector. The first axial section of the injector comprises a circular outer cross-section and the second axial section of the injector comprises an angular outer cross-section or the second axial section of the injector comprises the circular outer cross-section and the first axial section of the injector comprises the angular outer cross-section.

If the injector is coupled to the coupling body with its coupling section, the circular and angular outer cross-sections of the injector may contribute to the proper positioning of the injector relative to the coupling body. Further, this may contribute to the proper positioning of the injector relative to the fluid supply, if the coupling body is fixed to the fluid supply.

In an advantageous embodiment of the second aspect of the invention, the second axial section of the injector comprises a second coupling recess which extends rectangular to the axis of the injector. This may contribute to the proper fixation of the injector to the fluid supply and this may contribute to a simple assembling of the injector to the fluid supply.

In a further advantageous embodiment of the second aspect of the invention, the second coupling recess of the second axial section of the injector takes in a second coupling spring and a second ball. The second coupling spring, the second ball and the second coupling recess are arranged in such a way that the second ball is coupled with the injector movable in axial direction of the second coupling recess of the injector and that the second ball is pressed away from the injector by the second coupling spring. This may contribute to the proper fixation of the injector to the fluid supply and this may contribute to the simple assembling of the injector to the fluid supply.

In a further advantageous embodiment of the second aspect of the invention, the injector comprises an 0-ring seal and/or a washer which radially surrounds at least a part of the first and/or the second axial section of the injector. This may contribute to a proper sealing of the coupling body and the coupling section of the injector against the fluid.

The invention is distinguished concerning a third aspect of the invention by a coupling arrangement. The coupling arrangement comprises the coupling section of the injector, the coupling body and at least a part of the fluid supply. The coupling body is fixed to the fluid supply communicating with the fluid supply through the fluid recess in the bottom portion of the coupling body. At least a part of the first axial section of the injector is radially surrounded by the second axial section of the coupling body. At least a part of the second axial section of the injector is radially surrounded by the first axial section of the coupling body. That axial section of the injector which has the angular outer cross-section is surrounded by that axial section of the coupling body which has the angular inner cross-section. That axial section of the injector which has the circular outer cross-section is surrounded by that axial section of the coupling body which has the circular inner cross-section.

The circular and angular cross-sections of the axial sections of the coupling body and the coupling section of the injector contribute to the proper positioning of the injector relative to the fluid supply. Further, the circular and angular cross-sections of the axial sections of the coupling body and the coupling section of the injector contribute to the very simple assembling of the injector to the fluid supply.

In an advantageous embodiment of the third aspect of the invention, the first ball of the coupling body is partly arranged in the second coupling recess of the injector and/or the second ball of the injector is partly arranged in the first coupling recess of the coupling body.

The invention is explained in the following with the help of schematic drawings.

These are as follows:
- Figure 1: an injector and a fluid supply,
- Figure 2: a cut through a first embodiment of a coupling arrangement,
- Figure 3: a first cut through the coupling arrangement according to Figure 2,
- Figure 4: a second cut through the coupling arrangement according to Figure 2,
- Figure 5: a third cut through the coupling arrangement according to Figure 2,
- Figure 6: a fourth cut through the coupling arrangement according to Figure 2,
- Figure 7: a cut through a second embodiment of the coupling arrangement.

Elements with the same design or function that appear in the different illustrations are identified by the same reference characters.

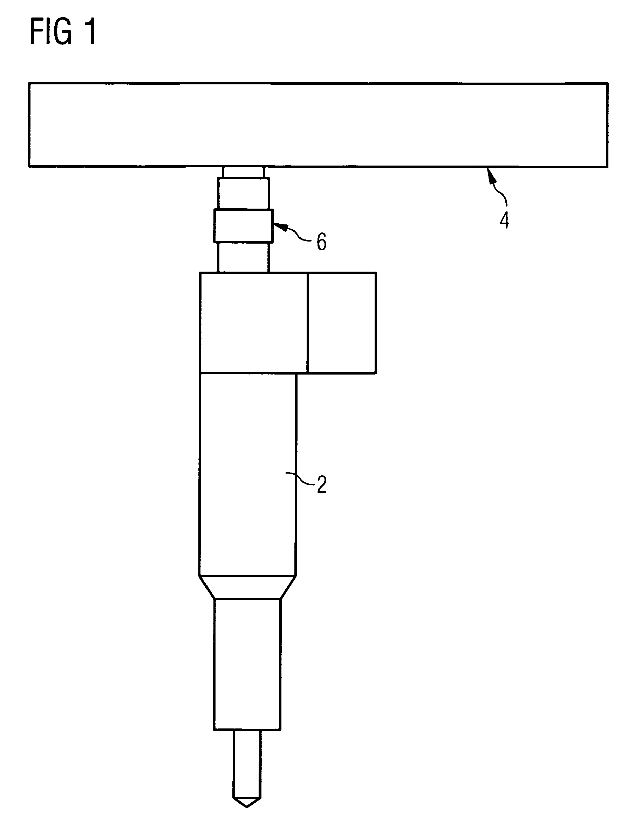

An injector 2 (figure 1) is connected to a fluid supply 4 via a coupling arrangement 6. The injector is suited for injecting fluid, preferably, the injector is suited for injecting fuel into a combustion chamber of an internal combustion engine. Preferably, the fluid supply 4 is part of a common rail and communicates with a fuel tank.

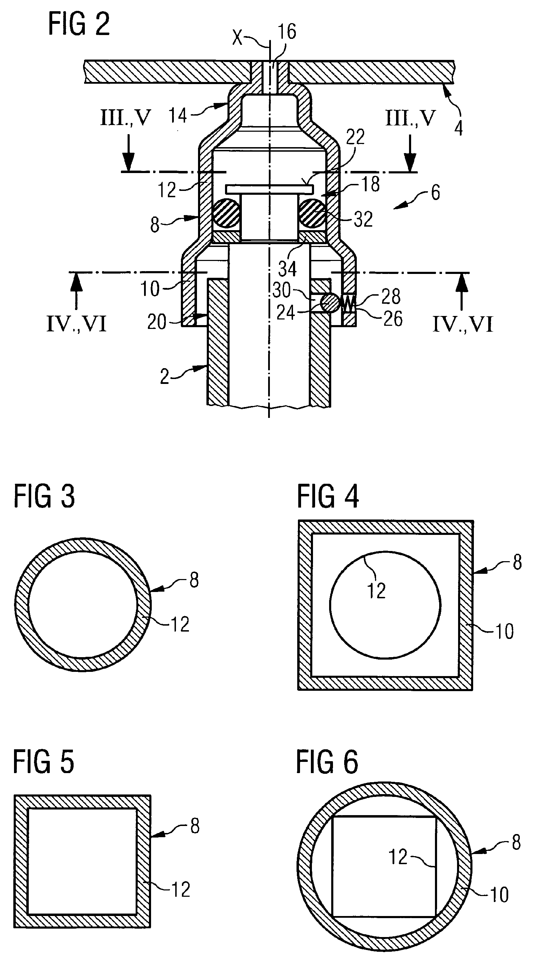

The coupling arrangement 6 comprises a coupling section of the injector 2, at least a part of the fluid supply 4, and a coupling body 8 (figure 2).

The coupling body 8 has a first and a second axial section 10, 12. Further, the coupling body 8 has a bottom portion 14 which has a fluid recess 16 and a side portion which comprises a first coupling recess 26. The coupling body 8 communicates with the fluid supply 4 via the fluid recess 16. Preferably, the first coupling recess 26 extends primarily rectangular to an axis X of the coupling body 8.

Further, a first coupling spring 28 and a first ball 24 are arranged and formed in the coupling body 8 in such a way that the first ball 24 is pressed towards the inside of the coupling body 8 in order to fix the injector 2 provisionally to the coupling body 8.

The injector 2 has coupling section which comprises a first and a second axial section 18, 20 of the injector 2. A second coupling recess 30 is formed in the coupling section of the injector 2, for example in the second axial section of the injector 2. Preferably, the second coupling recess 30 extends primarily rectangular to an axis of the coupling section of the injector 2.The injector 2 and the coupling body 8 are sealed against the fluid by an 0-ring seal 32 and/or a washer 34.

The first coupling recess 28 is arranged and formed in such a way that the first ball 24 is partly arranged in the second coupling recess 30. In that way, the injector 2 is provisionally fixed to the coupling body 8. This is especially advantageous if the injector 2 and the fluid supply 4 are preassembled and if after preassembling the injector 2 and the fluid supply 4 are assembled to the internal combustion engine, because then, the injector 2 is not able to fall apart from the fluid supply 4, however, the injector 2 may be forced further towards or away from the fluid supply 4 in its final position. Then, in it's final position the injector 2 may be fixed rigidly to the coupling body 8, for example by a coupling nut.

In order to guarantee a proper position of the injector 2 relative to the fluid supply 4, the axial sections 10, 12 of the coupling body 8 and the axial sections 20, 18 of the injector 2 comprise circular and angular cross-sections. In particular, the second axial section 12 of the coupling body 8 may comprise a circular inner cross-section (figure 3). Then, the first axial section 18 of the injector 2 comprises the circular outer cross-section. Further, the first axial section 10 of the coupling body 8 comprises the angular inner cross-section (figure 4). Then, the outer cross-section of the first axial section 18 of the injector 2 has the angular outer cross-section. Preferably, the axial sections 10, 12, 18, 20 of the coupling body 8 and, respectively of the injector 2 comprise a clearance fit to each other. So, depending on the angular cross-section there are only two or four possibilities how to stick the injector 2 into the coupling body 8. If the rough position is found, the precise position of the injector 2 relative to the coupling body 8 is guaranteed by the angular cross-sections. The circular cross-sections contribute to the proper sealing of the coupling body 8 and the injector 2 against the fluid.

In an alternative embodiment of the invention, the second axial section 12 of the coupling body 8 comprises the angular inner cross-section (figure 5). Then, the first axial section 18 of the injector 2 comprises the outer angular cross-section. Further, the first axial section 10 of the coupling body 8 comprises the circular inner cross-section and the second axial section 20 of the injector 2 comprises the circular outer cross-section (figure 6).

In order to enable a simple assembling of the injector to the coupling body 8, the inner cross-section of the first axial section 10 of the coupling body overlaps the inner cross-section of the second axial section 12 of the coupling body 8. Further, the outer cross-section of the second axial section 20 of the injector 2 completely overlaps the outer cross-section of the first axial section 18 of the injector 2.

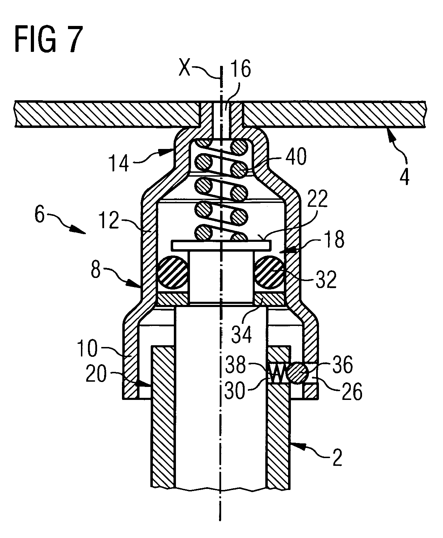

In an further alternative embodiment a second coupling spring 38 and a second ball 36 are arranged in the second coupling recess 30 (figure 7). The second coupling recess 30, the second spring 38 and the second ball 36 are formed and arranged in such a way that neither the second coupling spring 38 nor the second ball 36 can fall apart from the second coupling recess 30 and that the second ball 36 is pressed away from the injector 2 by the second coupling spring 38.

The second coupling recess 30 is arranged and formed in such a way that the second ball 36 is partly arranged in the first coupling recess 26 of the injector 2. In that way, the injector 2 is provisionally fixed to the coupling body 8. This is especially advantageous if the injector 2 and the fluid supply 4 are preassembled and if after preassembling the injector 2 together with the fluid supply are assembled to the internal combustion engine, because then the injector 2 is not able to fall apart from the fluid supply 4 while enabling a further movement of the injector 2 towards or away from the fluid supply 4.

Preferably, there is a spring 40 arranged in the coupling body 8. Preferably, the spring 40 is fixed at one axial end of the spring 40 to the bottom portion 14 of the coupling body 8. Alternatively, instead of the spring 40 there may be arranged another flexible element. The spring 40 presses the injector in its seat at a head of the combustion engine. The spring 40 may also be arranged in the first embodiment of the coupling body 8.

The invention is not restricted by the explained embodiments. For example, the different embodiments may be combined. There may be arranged the first and the second balls 24, 36 and the first and the second coupling spring 28, 38. However, then the first and the second coupling recesses 26, 38 are preferably arranged in non-overlapping areas and then there are further coupling recesses for acting together with the first and/or the second ball 24, 36. Further, as an alternative, the angular cross-sections may comprise three, five or more angles.

## Claims

1. Coupling body (8) for a coupling device (6), with the coupling body (8) being cup-shaped, having a fluid recess (16) in a bottom portion (14) of the coupling body (8), and comprising a first axial section (10) and a second axial section (12) of the coupling body (8) which are formed and arranged in such a way that
- the second axial section (12) of the coupling body (8) is arranged intermediate the bottom portion (14) of the coupling body (8) and the first axial section (10) of the coupling body (8) in axial direction of the Coupling body (8),
- the inner cross section area of the first axial section (10) of the coupling body (8) completely overlaps the inner cross section area of the second axial section (12) of the coupling body (8) in a projection of the inner cross section area of the second axial section (12) of the coupling body (8) on the inner cross section area of the first axial section (10) of the coupling body (8),
- the first axial section (10) of the coupling body (8) comprises a circular inner cross section and the second axial section (12) of the coupling body (8) comprises an angular inner cross section or
- the first axial section (10) of the coupling body (8) comprises the angular inner cross section and the second axial section (12) of the coupling body (8) comprises the circular inner cross section.

2. Coupling body (8) in accordance with claim 1 comprising a flexible element which is fixed at one axial end of the flexible element to the bottom portion (14) of the coupling body (8) in such a way, that the fluid from the fluid supply (4) may pass the flexible element.

3. Coupling body (8) in accordance with claim 2 with the flexible element comprising a spring (40).

4. Coupling body (8) in accordance with one of the preceding claims with the first axial section (10) of the coupling body (8) having a first coupling recess (26) which extends rectangular to an axis (X) of the coupling body (8).

5. Coupling body (6) in accordance with claim 4 with the first coupling recess (26) of the first axial section (10) of the coupling body (8) taking in a first coupling spring (28) and a first ball (24) in such a way that the first ball (24) is coupled to the coupling body (8) movable in axial direction of the first coupling recess (26) and that the first ball (24) is pressed towards the inside of the coupling body (8) by the first coupling spring (28).

6. Injector (2) for injecting fluid comprising a coupling section for coupling the injector (2) to a fluid supply (4), with
- the coupling section comprising an end face (22) of the injector (2) and a first and a second axial section (18, 20) of the injector (2),
- the first axial section (18) of the injector (2) being arranged intermediate the end face (22) and the second axial section (20) of the injector (2) in axial direction of the injector (2),
- a cross section area of the second axial section (20) of the injector (2) completely overlapping a cross section area of the first axial section (18) of the injector (2) in a projection of the first axial section (18) of the injector (2) on the second axial section (20) of the injector (2),
- the first axial section (18) of the injector (2) comprising a circular outer cross section and with the second axial section (20) of the injector (2) comprising an angular outer cross section or
- the second axial section (20) of the injector (2) comprising the circular outer cross section and with the first axial section (18) of the injector (2) comprising the angular outer cross section.

7. Injector (2) in accordance with claim 6 with the second axial section (20) of the injector (2) comprising a second coupling recess (30) which extends rectangular to an axis (X) of the injector (2).

8. Injector (2) in accordance with claim 7 with the second coupling recess (30) of the second axial section (20) of the injector (2) taking in a second coupling spring (38) and a second ball (36) in such a way that the second ball (36) is coupled to the injector (2) movable in axial direction of the second coupling recess (30) of the injector (2) and that the second ball (36) is pressed away from the injector (2) by the second coupling spring (38).

9. Injector (2) in accordance with one of the claims 6 to 8 comprising an 0-ring seal (32) and/or a washer (34) which radially surround at least a part of the first and/or the second axial section (18, 20) of the injector (2).

10. Coupling arrangement (6) for coupling the injector (2) according to one of the claims 6 to 9 to the coupling body (8) of the fluid supply (4) according to one of the claims 1 to 5, wherein
- at least a part of the first axial section (18) of the injector (2) is radially surrounded by the second axial section (12) of the coupling body (8)
- at least a part of the second axial section of the injector (2) is radially surrounded by the first axial section (10) of the coupling body (8),
- that axial section (18, 20) of the injector (2) which has the angular cross section is surrounded by that axial section (10, 12) of the coupling body (8) which has the angular inner cross section,
- that axial section (18, 20) of the injector (2) which has the circular cross section is surrounded by that axial section (10, 12) of the coupling body (8) which has the circular inner cross section.

11. Coupling arrangement (6) in accordance with claim 10 with the first ball (24) of the coupling body (8) at least partly being arranged in the second coupling recess (30) of the injector (2) and/or with the second ball (36) of the injector (2) partly being arranged in the first coupling recess (26) of the coupling body (8).
